# FASCICULE DE BREVET EUROPEEN

(11) **EP 1 673 835 B1**
(45) Date de publication et mention de la délivrance du brevet: **30.07.2014**
(21) Numéro de dépôt: 04791521.0
(22) Date de dépôt: 13.10.2004
(51) Int. Cl.: H01M 8/08, H01M 4/86, H01M 4/88, H01M 4/00, H01M 4/90

(54) **PILE A COMBUSTIBLE ALCALINE COMPORTANT UNE ANODE COMPRENANT DE L'ALUMINIUM ET DU ZINC ET PROCEDE DE FABRICATION DE L'ANODE**
ALKALI-BRENNSTOFFZELLE MIT EINER ANODE AUS ALUMINIUM UND ZINK UND HERSTELLUNGSVERFAHREN FÜR EINE SOLCHE ANODE
ALKALINE FUEL CELL COMPRISING AN ANODE CONSISTING OF ALUMINIUM AND ZINC, AND METHOD OF PRODUCING ONE SUCH ANODE

(30) Priorité: 15.10.2003 FR 0312058
(43) Date de publication de la demande: 28.06.2006
(73) Titulaire: Commissariat à l'Énergie Atomique et aux Énergies Alternatives, 75015 Paris (FR)
(72) Inventeur: DAMERY, Emmanuel, F-38920 Crolles (FR); MARSACQ, Didier, F-38000 Grenoble (FR); ROUX, Christel, F-38210 Saint-Quentin-Sur-Isère (FR); PERRIN, Max, F-38120 Le Fontanil Cornillon (FR)
(74) Mandataire: Hecké, Gérard
(86) Numéro de dépôt international: PCT/FR2004/002608
(87) Numéro de publication internationale: WO 2005/038964

(56) Documents cités:
- EP-A- 0 576 944
- WO-A-02/082614
- GB-A- 1 210 677
- US-A- 3 773 639
- US-A- 3 939 440
- US-A- 5 316 632
- US-A1- 2003 134 172

## Description

### Domaine technique de l'invention

L'invention concerne une pile à combustible alcaline comportant au moins un électrolyte sur lequel est disposée une anode comportant au moins des première et seconde couches minces comprenant respectivement de l'aluminium et du zinc.

L'invention concerne également un procédé de fabrication d'une anode d'une telle pile à combustible alcaline.

### État de la technique

Les piles à combustible alcalines sont généralement des piles primaires, c'est-à-dire non rechargeables et elles sont généralement utilisées dans des dispositifs électroniques portables. Elles sont le siége :
- d'une réaction d'oxydation d'une anode métallique selon la réaction suivante :

   M → Mⁿ⁺ + ne⁻
- et d'une réaction de réduction de l'oxygène de l'air, en milieu alcalin, selon la réaction suivante :

   1/2 O₂ + H₂O + 2e⁻ → 2 OH⁻

Ainsi, le bilan de fonctionnement de ce type de piles est le suivant :

2M + n/2O₂ +nH₂O ⇔ 2M(OH)ₙ

où M représente le métal de l'anode et n représente le degré d'oxydation du métal M.

Selon le métal employé pour l'anode, la corrosion peut, cependant, limiter le fonctionnement de la pile à combustible. Ainsi, les anodes en aluminium sont peu employées car elles sont soumises à une très forte corrosion. En effet, le potentiel fortement électronégatif de l'aluminium en milieu aqueux induit une décomposition de l'eau en hydrogène et une dissolution spontanée de l'aluminium. De plus, la couche naturelle de passivation de l'aluminium n'est pas stable en milieu alcalin.

Le document WO-A-9607765 décrit une batterie alcaline comportant une poudre de zinc contenant de 0,0005% à 1% d'aluminium, 0,0001% à 2% d'au moins un élément choisi parmi le bismuth, l'indium et le gallium, au moins un élément choisi parmi le magnésium, le strontium, le baryum et les terres rares métalliques. Les éléments sont destinés à limiter la corrosion de l'anode. L'aluminium contenu dans la poudre reste cependant en contact avec l'électrolyte et peut donc être soumis à la corrosion.

Pour limiter la corrosion de l'anode, il est également connu de disposer une couche mince entre l'anode et l'électrolyte destinée à de protéger l'anode contre la corrosion. La couche de protection est généralement passive dans le fonctionnement de la pile à combustible et peut faire écran à la réaction électrochimique. Ainsi, pour permettre un bon fonctionnement de la pile, la couche de protection peut être rendue poreuse en ajoutant dans la couche de protection des éléments actifs lors du fonctionnement de la pile.

Ainsi, dans le document JP4104464, l'électrode négative est en zinc ou en un alliage de zinc et elle est recouverte par un alliage de gallium contenant de 0,1% à 15% en poids d'aluminium. Lors du fonctionnement de la pile, l'aluminium contenu en faible proportion dans l'alliage de gallium se dissout et génère une certaine porosité dans le revêtement en gallium de manière à autoriser le fonctionnement de l'électrode en zinc. Une telle pile a cependant un rendement plus faible qu'une pile comportant une anode en aluminium et la couche de protection en gallium est relativement coûteuse. En effet, avec une anode en aluminium, l'énergie théorique massique est de 8050Wh/kg tandis qu'elle est de 2360Wh/kg avec une anode en zinc.

Le brevet US-A-5316632 décrit une méthode pour améliorer l'efficacité d'une cellule électrochimique en contrôlant sélectivement et cycliquement la dissolution et l'inhibition d'une électrode en aluminium, immergée dans une solution aqueuse électrolytique. Ainsi, lorsque la cellule électrochimique est inactive, une couche de passivation est déposée sur l'électrode en aluminium, par précipitation de plomb, de nickel ou de zinc. Puis, pour le fonctionnement de la cellule, la couche de passivation est éliminée électrochimiquement de manière à permettre le dépôt, sur la surface de l'électrode, d'une couche d'activation obtenue par précipitation d'étain, d'indium, de gallium ou de cuivre. A la fin de la période de fonctionnement de la cellule, la couche d'activation est éliminée pour permettre le dépôt d'une nouvelle couche de passivation. Bien qu'une telle méthode permette de protéger l'électrode en aluminium contre la corrosion lorsque la cellule électrochimique ne fonctionne pas, cette méthode s'avère être difficile à mettre en oeuvre car elle requiert un grand nombre d'étapes mettant en jeu des dépôts par précipitation et des éliminations électrochimiques de couches de passivation et d'activation.

### Objet de l'invention

L'invention a pour but de réaliser une pile à combustible alcaline remédiant aux inconvénients de l'art antérieur, et plus particulièrement dans laquelle l'anode est protégée temporairement contre la corrosion tout en assurant à la pile un rendement élevé.

Selon l'invention, ce but est atteint par la revendication 1. La première couche mince est constituée par de l'aluminium ou par un alliage d'aluminium, la seconde couche mince étant disposée entre la première couche mince et l'électrolyte.

La seconde couche mince est constituée par du zinc ou par un alliage de zinc, et l'anode est constituée par une alternance de première et seconde couches minces.

L'invention a également pour but un procédé de fabrication d'une anode d'une telle pile à combustible, facile à mettre en oeuvre et peu coûteux.

Selon l'invention, ce but est atteint par le procédé de fabrication d'une anode d'une pile à combustible alcaline selon l'une des revendications 1 et 2. Le procédé consiste à déposer, par dépôt physique en phase vapeur, au moins une seconde couche mince destinée à venir en contact avec l'électrolyte et comportant du zinc sur un substrat formé par une première couche mince en aluminium ou en alliage d'aluminium.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente, en coupe, un premier mode de réalisation d'une pile à combustible selon l'invention.
La figure 2 représente, en coupe, une variante de réalisation d'une pile à combustible selon la figure 1.

### Description de modes particuliers de réalisation.

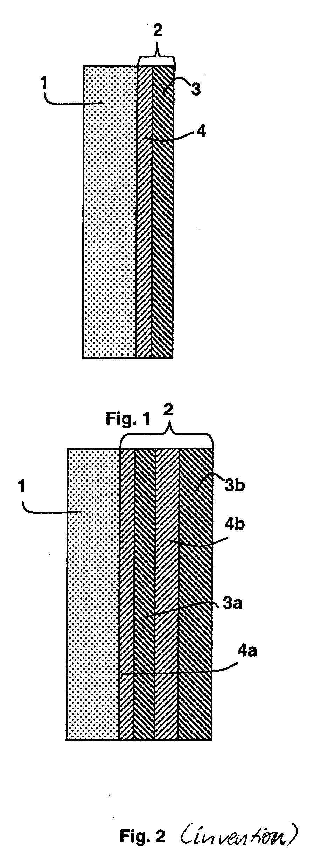

Selon un premier mode de réalisation illustré à la figure 1, une pile à combustible alcaline comporte au moins un électrolyte 1 sur lequel est disposée une anode 2. L'anode 2 est constituée par un empilement d'une première couche mince 3 et d'une seconde couche mince 4, ladite seconde couche mince étant disposée entre l'électrolyte 1 et la première couche mince 3. La première couche mince 3 est en aluminium ou en alliage d'aluminium tandis que la seconde couche mince 4 est en zinc ou en alliage de zinc.

Par alliage d'aluminium, on entend un alliage comportant au moins 75% en poids d'aluminium et par alliage de zinc, on entend un alliage comportant au moins 75% en poids de zinc.

Les première et seconde couches minces ont, de préférence, une épaisseur comprise entre 10nm et 100µm et la seconde couche mince peut avoir préférentiellement une épaisseur inférieure à celle de la première couche mince.

La cinétique de dissolution du zinc étant plus lente que celle de l'aluminium, le fait de disposer une seconde couche mince en zinc ou en alliage de zinc entre l'électrolyte et la première couche mince en aluminium ou en alliage d'aluminium permet de protéger temporairement la première couche contre la corrosion, tout en conservant un rendement de fonctionnement élevé. En effet, la seconde couche mince jouant le rôle de couche sacrificielle, elle est également oxydée et participe donc, par sa dissolution, au fonctionnement de pile à combustible alcaline tout en protégeant temporairement la première couche mince contre la corrosion. Ainsi, lorsque la pile à combustible alcaline fonctionne, le zinc de la seconde couche mince se dissout progressivement selon la réaction suivante Zn + 1/2O₂ +H₂O ⇔ Zn(OH)₂ de manière à générer une porosité et il génère un courant électrique. La dissolution du zinc peut éventuellement se poursuivre jusqu'à sa disparition totale. Puis l'aluminium de la première couche mince est consommé selon la réaction suivante 2Al + 3/2O₂ + 3H₂O ⇔ 2Al(OH)₃.

L'anode 2 de la pile à combustible alcaline est, de préférence, réalisée en déposant, par dépôt physique en phase vapeur, la seconde couche mince 4 destinée à venir en contact avec l'électrolyte 1 sur un substrat formé par la première couche mince 3 en aluminium ou en alliage d'aluminium.

Une telle pile à combustible présente l'avantage de pouvoir adapter la configuration de l'anode à un profil de consommation de la pile à combustible prédéterminé. Ainsi, en faisant varier l'épaisseur des première et seconde couches minces, il est possible d'ajuster la durée de stockage de la pile à combustible. A titre d'exemple, en considérant que la couche de zinc consommée pendant la non-utilisation de la pile est soumise à un courant de corrosion de 0,8mA/cm², si cette couche a une épaisseur de 100µm, la durée de stockage de la pile est de 72 heures tandis que pour une couche de zinc d'une épaisseur de 10nm, la durée de stockage est de 26 secondes.

Dans une variante de réalisation, l'anode 2, comme représentée à la figure 2, peut être constituée par une alternance de première et seconde couches minces 3 et 4, respectivement en aluminium ou en alliage d'aluminium et en zinc ou en alliage de zinc, une seconde couche mince 4 étant nécessairement en contact avec l'électrolyte 1. Dans ce cas, l'anode est, de préférence, réalisée en déposant par dépôt physique en phase vapeur, une alternance de première et seconde couches 3 et 4, sur une seconde couche mince 4, préalablement déposée sur un substrat en aluminium ou en alliage d'aluminium. De plus, les épaisseurs des premières couches minces 3 et/ou les épaisseurs des secondes couches minces 4 peuvent être différentes.

Ainsi, à la figure 2, l'anode est constituée par un empilement successif de quatre couches minces constitué par une alternance de deux premières couches minces et de deux secondes couches minces. Ainsi, une seconde couche mince 4a en zinc ou en alliage de zinc est disposée entre l'électrolyte 1 et une première couche mince 3a en aluminium ou en alliage d'aluminium. Une seconde couche mince supplémentaire 4b, du même type que la seconde couche mince 4a et, de préférence plus épaisse, est disposée entre la première couche mince 3a et une première couche mince 3b supplémentaire, du même type que la première couche mince 3a et de préférence plus épaisse. De plus, l'épaisseur de chaque seconde couches mince 4a ou 4b est, de préférence, inférieure à l'épaisseur de la première couche mince correspondante 3a ou 3b. Une telle variante de réalisation peut permettre d'obtenir un profil de consommation plus complexe. Ainsi, pour une pile nécessitant une puissance élevée toutes les heures de manière à, par exemple, transmettre des données, l'anode comportant une alternance de première et seconde couches, la seconde couche comportant du zinc est alors choisie de manière à fournir une consommation en énergie d'une heure et la première couche comportant de l'aluminium fourni l'énergie nécessaire à la transmission des données. Ainsi, une pile fonctionnant pendant 24 heures comporte, de préférence, une alternance de 24 premières couches et de 24 secondes couches. De même, un fonctionnement hebdomadaire peut être envisagé avec des périodes d'utilisation horaires ou journalières en utilisant des couches d'épaisseurs différentes.

## Revendications

1. Pile à combustible alcaline comportant au moins un électrolyte (1) sur lequel est disposée une anode (2) comportant au moins des première et seconde couches minces (3, 4) comprenant respectivement de l'aluminium et du zinc, la première couche mince (3) est constituée par de l'aluminium ou par un alliage d'aluminium, la seconde couche mince (4) étant disposée entre la première couche mince (3) et l'électrolyte (1) **caractérisée en ce que** la seconde couche mince (4) est constituée par du zinc ou un alliage de zinc et **en ce que** l'anode (2) est constituée par une alternance de première et seconde couches minces (3a, 3b et 4a, 4b).

2. Pile à combustible selon la revendication 1, **caractérisée en ce que** l'épaisseur de chaque couche mince (3, 4) est comprise entre 10nm et 100µm.

3. Procédé de fabrication d'une anode d'une pile à combustible alcaline selon l'une des revendications 1 et 2, caractérisé en qu'il consiste à déposer, par dépôt physique en phase vapeur, au moins une seconde couche mince (4) destinée à venir en contact avec l'électrolyte (1) et constituée par du zinc ou un alliage de zinc, sur un substrat formé par une première couche mince (3) en aluminium ou en alliage d'aluminium et en ce qu'une alternance de première et seconde couches minces (3a, 3b et 4a, 4b) est déposée, par dépôt physique en phase vapeur, sur la seconde couche mince (4b).

## Patentansprüche

1. Alkalische Brennstoffzelle mit mindestens einem Elektrolyten (1), auf dem eine Anode (2) angeordnet ist, welche mindestens eine erste und eine zweite Dünnschicht (3, 4) aufweist, welche jeweils Aluminium und Zink enthalten, wobei die erste Dünnschicht (3) aus Aluminium oder aus einer Aluminiumlegierung besteht, wobei die zweite Dünnschicht (4) zwischen der ersten Dünnschicht (3) und dem Elektrolyten (1) angeordnet ist, **dadurch gekennzeichnet, dass** die zweite Dünnschicht (4) aus Zink oder einer Zinklegierung besteht und dass die Anode (2) aus einer Wechselfolge der ersten und zweiten Dünnschicht (3a, 3b und 4a, 4b) besteht.

2. Alkalische Brennstoffzelle gemäß Anspruch 1, **dadurch gekennzeichnet, dass** die Dicke jeder Dünnschicht (3, 4) zwischen 10nm und 100µm liegt.

3. Verfahren zur Herstellung einer Anode einer alkalischen Brennstoffzelle gemäß einem der Ansprüche 1 und 2, **dadurch gekennzeichnet, dass** es darin besteht, durch physikalische Ablagerung in der Dampfphase mindestens eine zweite Dünnschicht (4), die mit dem Elektrolyten (1) in Kontakt treten soll und aus Zink oder einer Zinklegierung besteht, auf ein aus einer ersten Dünnschicht (3) aus Aluminium oder einer Aluminiumlegierung gebildete Substrat aufzubringen, und dass eine Wechselfolge der ersten und zweiten Dünnschichten (3a, 3b und 4a, 4b) durch physikalische Ablagerung in der Dampfphase auf die zweite Dünnschicht (4b) aufgebracht wird.

## Claims

1. Alkaline fuel cell comprising at least one electrolyte (1) on which is disposed an anode (2) comprising at least first and second thin layers (3, 4) respectively including aluminium and zinc, the first thin layer (3) consists of aluminium or of an aluminium alloy, the second thin layer (4) being disposed between the first thin layer (3) and the electrolyte (1) **characterized in that** the second thin layer (4) consists of zinc or a zinc alloy and **in that** the anode (2) consists of an alternation of first and second thin layers (3a, 3b and 4a, 4b).

2. Fuel cell according to claim 1, **characterized in that** the thickness of each thin layer (3, 4) is comprised between 10nm and 100µm.

3. Method for producing an anode of an alkaline fuel cell according to any one of the claims 1 and 2, **characterized in that** it consists in depositing at least one second thin layer (4) designed to come into contact with the electrolyte (1) and consisting of zinc or a zinc alloy, by physical vapor deposition, on a substrate formed by a first thin layer (3) made of aluminium or an aluminium alloy and **in that** an alternation of first and second thin layers (3a, 3b and 4a, 4b) is deposited on the second thin layer (4b) by physical vapor deposition.
